# EUROPÄISCHE PATENTSCHRIFT

(11) **EP 1 107 436 B1**
(45) Veröffentlichungstag und Bekanntmachung des Hinweises auf die Patenterteilung: **06.06.2007**
(21) Anmeldenummer: 00125821.9
(22) Anmeldetag: 24.11.2000
(51) Int. Cl.: H02M 1/12, B60L 9/00

(54) **Verfahren und Einrichtung zur Vermeidung von Netzrückwirkungen beim Betrieb eines Pulsstromrichters**
Method and system for avoiding interferences on the supply network in the operation of a pulse current rectifier
Procedé et dispositif pour empecher des interferences sur le reseau d'alimentation dans le functionnement d'un redresseur de courant pulsé

(30) Priorität: 08.12.1999 DE 19959205
(43) Veröffentlichungstag der Anmeldung: 13.06.2001
(73) Patentinhaber: SIEMENS AKTIENGESELLSCHAFT, 80333 München (DE)
(72) Erfinder: Schülein, Peter, Dipl.-Ing. (FH), 91058 Erlangen (DE)

(56) Entgegenhaltungen:
- EP-A- 0 906 846
- WO-A-96/08862
- DE-A- 3 311 874
- US-A- 5 939 887
- RUNGE W: "NIEDERFREQUENTE NETZRUECKWIRKUNGEN VON BAHNFAHRZEUGEN MIT DREHSTROMANTRIEBSTECHNIK" ELEKTRISCHE BAHNEN, OLDENBOURG VERLAG. MUNCHEN, DE, Bd. 90, Nr. 10, 1. Oktober 1992 (1992-10-01), Seiten 319-327, XP000307264 ISSN: 0013-5437
- STEYN B M ET AL: "MODELLING AND SIMULATION USED IN STUDIES OF ELECTROMAGNETIC COMPATIBILITY BETWEEN ELECTRONIC TRACTION SYSTEMS AND RAILWAY SIGNALING SYSTEMS" ELEKTRISCHE BAHNEN, OLDENBOURG VERLAG. MUNCHEN, DE, Bd. 92, Nr. 3, 1. März 1994 (1994-03-01), Seiten 62-71, XP000426873 ISSN: 0013-5437
- RUNGE W: "CONTROL OF LINE HARMONICS DUE TO FOUR-QUADRANT-CONVERTER IN AC TRACTIVE STOCK BY MEANS OF FILTER AND TRANSFORMER" EPE '97. 7TH. EUROPEAN CONFERENCE ON POWER ELECTRONICS AND APPLICATIONS. TRONDHEIM, SEPT. 8 - 10, 1997, EPE. EUROPEAN CONFERENCE ON POWER ELECTRONICS AND APPLICATIONS, BRUSSELS, EPE ASSOCIATION, B, Bd. 3 CONF. 7, 8. September 1997 (1997-09-08), Seiten 3459-3464, XP000768335 ISBN: 90-75815-02-6
- JOOS G ET AL: "Electromagnetic interference issues in the specification of AC and DC propulsion systems for light rail vehicles" RAILROAD CONFERENCE, 1998. PROCEEDINGS OF THE 1998 ASME/IEEE JOINT PHILADELPHIA, PA, USA 15-16 APRIL 1998, NEW YORK, NY, USA,IEEE, US, 15. April 1998 (1998-04-15), Seiten 41-47, XP010275343 ISBN: 0-7803-4852-4

## Beschreibung

Die Erfindung betrifft eine Einrichtung zur Vermeidung von Netzrückwirkungen beim Betrieb eines Pulsstromrichters mit einer Frequenzüberwachungsvorrichtung.

In einem breiten Anwendungsbereich, insbesondere zur Ansteuerung von Antrieben, kommen heutzutage gepulste Stromrichter zum Einsatz. Diese haben die nachteilige Eigenschaft, daß sie im treibenden Netz Netzrückwirkungen mit einem bestimmten Frequenzspektrum erzeugen können, die aus verschiedenen Gründen unerwünscht sind.

Durch Netzrückwirkungen verursachte Störströme im Netz können z. B. in benachbarten Fernsprechleitungen Geräuschspannungen induzieren. Besonders unerwünscht sind solche Störströme in Bahnsystemen, da sie auf Signalstromkreise zurückwirken können. Ein gebräuchliches System zur Gleisfreimeldung arbeitet beispielsweise mit einer niederfrequenten Spannung, die abschnittsweise an die beiden Schienen eines Gleises angelegt wird. Durch die Räder eines Zuges, der diesen Gleisabschnitt befährt, wird der Stromkreis geschlossen und der Gleisabschnitt als "besetzt" erkannt. Wird eine Spannung mit diesem Frequenzanteil und einem bestimmten Pegel nun durch den Stromrichter eines Triebfahrzeuges generiert, so kann der Signalstromkreis zur Gleisfreimeldung unter Umständen dahingehend beeinflußt werden, daß der Gleisabschnitt fälschlich als "frei" gemeldet wird. Da ein solcher Fall ausgeschlossen werden muß, werden in den Bahnbetriebssystemen und Bahnantriebssteuerungen eine Reihe von Vorsichtsmaßnahmen getroffen.

Neben passiven Maßnahmen durch den Einsatz von Filtern sind aktive Maßnahmen bekannt, um Netzrückwirkungen weitgehend zu unterdrücken. So können kritische Harmonische z. B. durch die Wahl bestimmter Taktverfahren ausgeschlossen werden. Sicherheit, ob ein Störstrom einer bestimmten Frequenz im Netz auftritt, besteht hingegen nur, wenn das Netz auf diese Frequenz hin überwacht wird. Üblich ist deshalb eine Überwachungsschaltung auf jedem Triebfahrzeug, bei der aus einem über einen Stromwandler gemessenen Strom mittels Bandpässen die kritischen Frequenzen herausgefiltert werden. Überschreitet ein Störstrom kritischer Frequenz eine bestimmte Schwelle länger als eine vorgegeben Zeit, so wird der Stromrichter des Fahrzeugantriebs gesperrt und der Hauptschalter geöffnet.

Es ist indessen nicht sicher, ob der Stromrichter tatsächlich der Verursacher des Störstromes war. So können Störströme auch durch schnelle Stromänderungen im Netz, veranlaßt durch plötzlichen Lastabwurf, verursacht werden. Auch auf dem Nebengleis vorüberfahrende Triebfahrzeuge können derartige Störströme bewirken.

In Runge, Niederfrequente Netzrückwirkungen von Bahnfahrzeugen mit Drehstromantriebstechnik, Elektrische Bahnen, 90 (1992), Nr 10, S. 319 - 327 findet sich z. B. eine Untersuchung über niederfrequente Störströme in Bahnsystemen; eine Lösung zur Verhinderung der oben angesprochenen Fehlauslösungen wird indessen nicht angegeben.

Aus der WO 96/08862 ist ein Verfahren bekannt, mit dem Störströme im Signalfrequenzbereich gedämpft werden. Dabei wird zur Störstromregelung die Frequenz der Stromharmonischen betrachtet.

Der Erfindung liegt die Aufgabe zugrunde, eine Einrichtung zur Vermeidung von Netzrückwirkungen anzugeben, die es erlaubt, einen Pulsstromrichter selektiv als Verursacher eines Störstromes kritischer Frequenz zu erkennen oder auszuschlie-ßen.

Die Aufgabe wird gemäß der Erfindung dadurch gelöst, dass Fensterkomparatoren vorhanden sind für die negative und positive Halbwelle einer der Eingangsspannung des Stromrichters proportionalen Messgröße, deren Ausgangssignale an einen von einem Timer gesteuerten, die Takte während einer am Timer voreingestellten Zeitperiode (Taktfrequenz) zählenden (messenden) Pulszähler geführt sind, dessen Ausgang mit mindestens einem Komparator verbunden ist, dessen Ausgangssignal bei Über- oder Unterschreiten eines voreingestellten Wertes zu einer Meldung und/oder zum Ausschließen des Stromrichters verwertbar ist.

Zweckmäßige Ausgestaltungen sind Gegenstand der Unteransprüche.

Mit der Einrichtung nach der Erfindung wird die Taktfrequenz des Stromrichters überwacht. Bei Über- oder Unterschreiten einer oder mehrerer vorgewählter Grenzfrequenzen über einen vorgegebenen Pegel und eine vorgegebene Zeit erfolgt eine Meldung und/oder Schalthandlung zur Beeinflussung des Stromrichters.

In erfindungsgemäß besonders bevorzugter Weise wird die Taktfrequenz aus der Eingangsspannung des Stromrichters ausgefiltert.

Das bedeutet, daß die Taktfrequenz bei einer üblichen Schaltung mit einem zwischen dem Stromrichter und dem speisenden Netz angeordneten Transformator aus einem Spannungssignal ausgefiltert wird, das einem an die Sekundärwicklung des Transformators angekoppelten Spannungswandler entnommen wird.

Die Erfindung macht sich die Erkenntnis zunutze, daß sich die Taktfrequenz eines Stromrichters in dessen Eingangsspannung abbildet und somit überwachen läßt. Solange die tatsächliche Taktung des Stromrichters in einem vorgesehenen Frequenzbereich erfolgt, kann ein eventuell primärseitig festgestellter Störstrom mit einer kritischen Frequenz nicht von dem derart überwachten Stromrichter herrühren. Eine Fehlausschaltung, die immer mit Unannehmlichkeiten für den Fahrbetrieb und bei Personenbeförderung für die Fahrgäste verbunden ist, kann so vermieden werden.

Im Gegensatz zu bekannten Taktfrequenzüberwachungen wird nach Lehre der Erfindung bevorzugt die tatsächlich erfolgte Taktung überwacht. Bei bekannten Taktfrequenzüberwachungen wird die Taktfrequenz lediglich aus den Ansteuersignalen der Stromrichterventile abgeleitet. Den Taktgebern sind jedoch noch Verstärker, Übertrager und die anzusteuernden Ventile nachgeordnet, so daß nicht sicher sein kann, ob ein ausgegebener Taktimpuls tatsächlich zum Reagieren eines Ventils geführt hat. Über die tatsächliche Taktung kann dagegen mit Sicherheit auf das zu erwartende Störstrom-spektrum geschlossen werden.

Zur Taktfrequenzüberwachung ist eine Schaltung geeignet, bei der Fensterkomparatoren für die negative und positive Halbwelle einer der Eingangsspannung des Stromrichters proportionalen Meßgröße, deren Ausgangssignale an einen von einem Timer gesteuerten, die Takte während einer am Timer voreingestellten Zeitperiode zählenden Zähler geführt sind. Dessen Ausgang ist mit mindestens einem Komparator verbunden, dessen Ausgangssignal bei Über- oder Unterschreiten eines voreingestellten Wertes zur Meldung und/oder zur Beeinflussung des Stromrichters verwertbar ist.

Es empfiehlt sich, jeweils zwei nachfolgende Zählperioden zu überwachen. Dazu ist der Ausgang des oder der Komparatoren mit einem Speicher und einem ersten Eingang eines UND-Gliedes und der Ausgang des Speichers mit dem zweiten Eingang des UND-Gliedes verbunden, dessen Ausgangssignal zur Meldung und/oder Beeinflussung des Stromrichters verwertbar ist.

Die die Eingangsspannung des Stromrichters abbildende Meßgrö-ße wird bei einer üblichen Stromrichteranordnung mit einem vorgeschalteten Netztransformator zweckmäßig einem an dessen Sekundärwicklung angekoppelten Spannungswandler entnommen.

Neben dem angegebenen Einsatzzweck kann die Taktfrequenzüberwachung überall dort eingesetzt werden, wo es auf die Überwachung der tatsächlich erfolgten Taktung ankommt.

Die Erfindung soll nachstehend anhand eines Ausführungbeispiels näher erläutert werden.

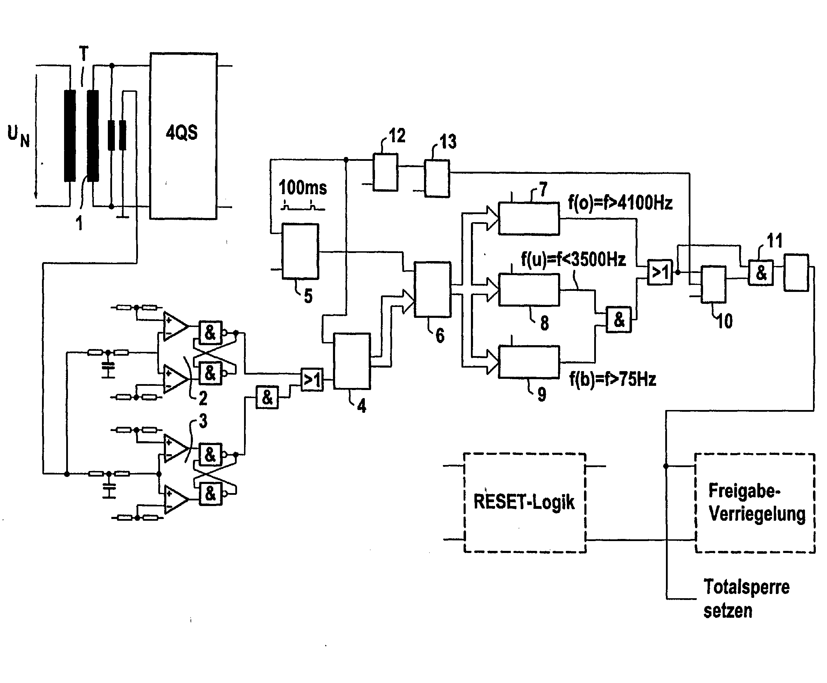

Die Zeichnung zeigt ein Schaltbild zur Taktfrequenzüberwachung eines Vierquadrantenstellers 4QS für einen Triebfahrzeugantrieb, der über einen Transformator T eines Bahnnetzes mit der Netzwechselspannung u_{N} betrieben wird. Von einem Spannungswandler 1 an der Sekundärwicklung des Transformators T wird ein Spannungssignal gewonnen und an einen Fensterkomparator 2 für die positive Halbwelle und einen. Fensterkomparator 3 für die negative Halbwelle der Eingangsspannung des Vierquadrantenstellers 4QS gegeben. Die Fensterkomparatoren 2 und 3 sind hysteresebehaftet und stellen jeweils einen Puls für die nachfolgende Zählung der Takte des Vierquadrantenstellers 4QS bereit, wenn ein vorbestimmter Spannungspegel am Eingang der Fensterkomparatoren über- bzw. unterschritten wird. Jeder Puls steht somit für eine erfolgte Taktung des Vierquadrantenstellers 4QS und läßt sich in einem nachfolgenden Pulszähler 4 zählen, wobei die Zählperiode jeweils von einem Timer 5 bereitgestellt wird.

Für den Vierquadrantenstellers 4QS sind im vorliegenden Fall IGBTs vorgesehen, die sich mit einer hohen Frequenz takten lassen. Bei einer Taktsollfrequenz von 3.800 Hz und einem Aussteuerungsgrad von 5% bis 95% ergeben sich beispielsweise Impulse mit einer minimalen Breite von 13 µs. Damit die Taktfrequenzüberwachung auch eine Taktfrequenz von über 4.100 Hz und gleichzeitig ungünstigem Aussteuerungsgrad noch sicher erkennen kann, müssen Impulse mit einer Breite von 12 µs noch ausreichend genau durch den Spannungswandler 1 und die nachfolgende Auswerteelektronik verarbeitet werden können. Daraus ergibt sich eine minimal zu fordernde Bandbreite des Spannungswandlers 1 von etwa 100 kHz.

Von dem Pulszähler 4 werden alle Pulse innerhalb eines 100-ms-Rasters gezählt. Bei einer Sollfrequenz von 3.800 Hz ergibt sich dabei eine Sollpulszahl von 380. Als Pulszähler 4 wird demnach mindestens ein 9-Bit-Zähler gewählt.

Die aktuelle Pulszahl wird nach Ablauf einer Zählperiode in ein Latch 6 übernommen und von dort in drei Komparatoren 7, 8 und 9 mit fest vorgegebenen Werten verglichen, so daß die aktuelle Pulsfrequenz auf Werte von 3.800 ± 300 Hz (380 = 30 Pulse in 100 ms) oder kleiner 150 Hz (15 Pulse in 100 ms) kontrolliert wird. Eine Pulsfrequenz von unter 150 Hz entspricht dabei einer sinusförmigen Spannung mit einer Frequenz von unter 75 Hz. Werden diese Grenzen nicht eingehalten, dann wird dieser Zustand in einem Flip-Flop 10 gespeichert. Weicht die Taktfrequenz des nachfolgenden 100-ms-Rasters ebenfalls von den Grenzwerten ab, dann wird am Ausgang eines UND-Gliedes 11, dessen erster Eingang mit dem Eingang des Flip-Flops 10 und dessen zweiter Eingang mit dem Ausgang des Flip-Flops 10 verbunden ist, ein Signal erzeugt und der Hauptschalter über die Freigabeverriegelung ausgeschaltet.

Durch die Auszählung von zwei 100-ms-Rastern kann auf eine Synchronisation mit dem Startzeitpunkt des Taktbetriebes verzichtet werden. Auch bei Beginn oder Beenden des Taktbetriebes ist so gewährleistet, daß immer mindestens eine Zählperiode mit voller Taktung auf eine innerhalb der eingestellten Grenzen befindliche Pulszahl hin überwacht wird.

Eine sinusförmige Spannung mit einer Frequenz von unter 75 Hz wird zugelassen, da bei geschlossenem Hauptschalter und nicht taktendem Vierquadrantensteller 4QS die Netzspannung u_{N} mit einer Frequenz von nominal 50 Hz erwartet wird.

Eine Meßzeit von 100 ms wurde gewählt, damit die Zeit einerseits möglichst lange ist, um Meßfehler zu minimieren, andererseits aber der Hauptschalter noch schnell genug ausgeschaltet werden kann. Eine Meßzeit von 100 ms stellt sicher, daß unerlaubte Oberströme, die durch ein "falsches" Takten des Vierquadrantenstellers 4QS hervorgerufen werden, rechtzeitig genug erkannt und durch anschließendes Öffnen des Hauptschalters unterbunden werden.

Nach Ablauf der 100 ms werden Timer 5 und Pulszähler 4 jeweils neu gestartet. Außerdem wird das Flip-Flop 10, jeweils um eine Zählperiode zeitversetzt, rückgesetzt. Der Zeitversatz wird durch die Flip-Flops 12 und 13 erzeugt.

Der Ausschaltzustand des Hauptschalters kann nur durch einen Fahrer-RESET rückgesetzt werden. Liegt nach dem RESET immer noch eine falsche Taktfrequenz an, so löst die Taktfrequenzüberwachung den Hauptschalter innerhalb von 200 ms erneut aus. Der Fall ist nur fehlerbedingt denkbar, da nach dem Öffnen des Hauptschalters am Spannungswandler 1 ein Frequenz von Null Hz gemessen wird, die als unter 75 Hz detektiert wird und damit nicht zur erneuten Auslösung der Taktfrequenzüberwachung führt. Bevor eine falsche Taktfrequenz gemessen werden kann, muß der Hauptschalter wieder geschlossen sein.

## Patentansprüche

1. Einrichtung zur Vermeidung von Netzrückwirkungen beim Betrieb eines Pulsstromrichters mit einer Frequenzüberwachungsvorrichtung, **gekennzeichnet durch** Fensterkomparatoren (2, 3) für die negative und positive Halbwelle einer der Eingangsspannung des Stromrichters (4QS) proportionalen Messgröße, deren Ausgangssignale an einen von einem Timer (5) gesteuerten, die Takte während einer am Timer (5) voreingestellten Zeitperiode (Taktfrequenz) zählenden (messenden) Pulszähler (4) geführt sind, dessen Ausgang mit mindestens einem Komparator (7, 8, 9) verbunden ist, dessen Ausgangssignal bei Über- oder Unterschreiten eines voreingestellten Wertes zu einer Meldung und/oder zum Ausschließen des Stromrichters (4QS) verwertbar ist.

2. Einrichtung nach Anspruch 1, **dadurch gekennzeichnet, dass** der Ausgang des oder der Komparatoren (7, 8, 9) mit einem Speicher (10) und einem ersten Eingang eines UND-Gliedes (11) und der Ausgang des Speichers (10) mit dem zweiten Eingang des UND-Gliedes (11) verbunden ist, dessen Ausgangssignal zur Meldung und/oder zum Ausschließen des Stromrichters (4QS) verwertbar ist.

3. Einrichtung nach Anspruch 1 oder 2, **dadurch gekennzeichnet, dass** die die Eingangsspannung des Stromrichters (4QS) abbildende Messgröße einem an die Sekundärwicklung eines dem Stromrichter (4QS) vorgeschalteten Transformators (T) gekoppelten Spannungswandler (1) entnommen ist.

## Claims

1. Device for avoidance of power supply system reactions during operation of a pulse-controlled converter with a frequency monitoring apparatus, **characterized by** window comparators (2, 3) for the negative and positive half-cycles of a measurement variable which is proportional to the input voltage of the converter (4QS) and whose output signals are passed to a pulse counter (4), which is controlled by a timer (5) and counts (measures) the clock cycles during a time period (clock frequency) which is preset at the timer (5), with the output of this pulse counter (4) being connected to at least one comparator (7, 8, 9), whose output signal can be assessed to form a signal and/or to exclude the converter (4QS) when a preset value is overshot or undershot.

2. Device according to Claim 1, **characterized in that** the output of the comparator or comparators (7, 8, 9) is connected to a memory (10) and to a first input of an AND gate (11), and the output of the memory (10) is connected to the second input of the AND gate (11), whose output signal can be assessed for signalling and/or for exclusion of the converter (4QS).

3. Device according to Claim 1 or 2, **characterized in that** the measurement variable which maps the input voltage of the converter (4QS) is taken from a voltage converter (1) which is coupled to the secondary winding of a transformer (T) which is connected upstream of the converter (4QS).

## Revendications

1. Dispositif pour éviter des réactions sur le réseau lors du fonctionnement d'un convertisseur impulsionnel ayant un dispositif de surveillance de fréquence, **caractérisé par** des comparateurs à fenêtres (2, 3) pour les demi-ondes négative et positive d'une grandeur mesurée proportionnelle à la tension d'entrée du convertisseur (4QS), comparateurs à fenêtres dont les signaux de sortie sont envoyés à un compteur d'impulsions (4) qui est commandé par un temporisateur (5), qui compte (mesure) les cycles pendant une période (fréquence d'horloge) préréglée sur le temporisateur (5) et dont la sortie est reliée à au moins un comparateur (7, 8, 9) dont le signal de sortie, lorsqu'il devient inférieur ou supérieur à une valeur préréglée, est exploitable pour produire un message et/ou pour exclure le convertisseur (4QS).

2. Dispositif selon la revendication 1, **caractérisé par le fait que** la sortie du ou des comparateurs (7, 8, 9) est reliée à une mémoire (10) et à une première entrée d'un élément ET (11) et que la sortie de la mémoire (10) est reliée à la deuxième entrée de l'élément ET (11) dont le signal de sortie est évaluable pour donner un message et/ou pour exclure le convertisseur (4QS).

3. Dispositif selon la revendication 1 ou 2, **caractérisé par le fait que** la grandeur mesurée reproduisant la tension d'entrée du convertisseur (4QS) est prélevée à un convertisseur de tension (1) couplé à l'enroulement secondaire d'un transformateur (T) branché du côté amont du convertisseur (4QS).
